# EUROPÄISCHE PATENTSCHRIFT

(11) **EP 2 598 592 B1**
(45) Veröffentlichungstag und Bekanntmachung des Hinweises auf die Patenterteilung: **16.03.2016**
(21) Anmeldenummer: 11743489.4
(22) Anmeldetag: 26.07.2011
(51) Int. Cl.: C09J 167/02, C09J 177/00

(54) **SCHMELZKLEBSTOFF UND VERFAHREN ZUR HERSTELLUNG EINES SCHMELZKLEBSTOFFES**
HOTMELT ADHESIVE AND PROCESS FOR PREPARING A HOTMELT ADHESIVE
ADHÉSIF FUSIBLE ET PROCÉDÉ DE FABRICATION D'UN ADHÉSIF FUSIBLE

(30) Priorität: 26.07.2010 DE 102010032294
(43) Veröffentlichungstag der Anmeldung: 05.06.2013
(73) Patentinhaber: Mann + Hummel GmbH, 71638 Ludwigsburg (DE)
(72) Erfinder: MBADINGA-MOUANDA, Gelase, 53000 Laval (FR); MAJER, Tanja, 74379 Ingersheim (DE); GEHWOLF, Klaus, 94437 Mamming (DE)
(86) Internationale Anmeldenummer: PCT/EP2011/062785
(87) Internationale Veröffentlichungsnummer: WO 2012/013650

(56) Entgegenhaltungen:
- EP-A1- 1 454 957
- WO-A1-2005/063908
- WO-A2-99/35189
- US-A- 4 217 435

## Beschreibung

### Technisches Gebiet

Die Erfindung betrifft einen Schmelzklebstoff und ein Verfahren zu dessen Herstellung.

### Stand der Technik

Nicht reaktive Schmelzklebstoffe sind Produkte, die lösungsmittelfrei und bei Raumtemperatur mehr oder weniger fest sind und im heißen Zustand auf eine Klebefläche aufgetragen werden und beim Abkühlen die Klebeverbindung herstellen. Diese Gruppe von Klebstoffen ist auch als Hotmelt bekannt und basiert auf verschiedenen chemischen Rohstoffen. DIN EN 923 definiert Schmelzklebstoff als ein thermisch aufschmelzbares Klebesystem, das nach der Abkühlung Kohäsion entwickelt. Schmelzpunkte von Schmelzklebstoffen liegen meist zwischen 80°C und 250°C. Aus dem Stand der Technik sind verschiedene nicht reaktive Schmelzklebstoffe auf Basis von Polyestern oder Polyamiden bekannt, zum Beispiel Macromet 2030, 6208 von Henkel, WEVO T570, P 165 von WEVO Chemie oder TH 207, TH 111 von Bostik. Aus MÜLLER UND RATH: Formulierung von Kleb- und Dichtstoffen. Hannover: Vincentz Network, 2004 sind weitere Schmelzklebstoffe bekannt. Ferner sind aus US 4 217 435 A und WO 99/35189 A2 Schmelzklebstoffe zum Verkleben von flachen Substraten sowie aus WO 2005/063908 A1 und EP 1 454 957 A1 Schmelzklebstoffe zur Verklebung von elektrischen Modulen und Chipkarten bekannt. Beim Auftrag der Schmelzklebstoffe entstehen regelmäßig, insbesondere bei der Unterbrechung des Auftrags mittels Auftragsdüsen, Klebstofffäden, die sich zwischen dem aufgetragenen Klebstoff und einer Auftragsdüse bilden und ggf. abreißen (Fadenzug).

Der Erfindung liegt die Aufgabe zugrunde, einen nicht reaktiven Schmelzklebstoff darzustellen, der eine geringe Fadenzugneigung aufweist und insbesondere eine hohe Temperaturstandfestigkeit aufweist. Ferner ist es Aufgabe der Erfindung, ein Verfahren zur Herstellung eines Schmelzklebstoffes darzustellen.

### Offenbarung der Erfindung

Diese Aufgabe wird durch ein Schmelzklebstoffsystem, gemäß Anspruch 1 umfassend eine Schmelzklebstoffmischung, die Mischung umfassend 15-85 Gewichts-%, insbesondere 30-70 Gewichts-% eines ersten Schmelzklebstoffs, der Polyester basiert ist, und 15-85 Gewichts-%, insbesondere 30-70 Gewichts-% eines zweiten Schmelzklebstoffes, der Polyester basiert ist, gelöst. Dabei soll die Summe der Bestandteile 100% der Schmelzklebstoffmischung und insbesondere 100% des Schmelzklebstoffsystems ergeben. Erfindungsgemäß ist das Schmelzklebstoffsystem dadurch gekennzeichnet, dass der Polyester basierte Schmelzklebstoff einen Schmelzpunkt zwischen 150°C und 170°C und der Polyamid basierte Schmelzklebstoff einen Schmelzpunkt zwischen 180°C und 210°C aufweist.

Dieses Schmelzklebstoffsystem hat überraschend den Vorteil, dass damit ein insbesondere regemäßig unterbrochener, spurförmiger Auftrag des Schmelzklebstoffes insbesondere mittels Auftragsdüsen auf ein Substrat, insbesondere ein faseriges Substrat, z. B. aus Zellulose, beispielsweise Papier, ohne oder weitestgehend ohne die Bildung von Schmelzklebstofffäden möglich ist.

Die Mengenangaben zu dem ersten und dem zweiten Schmelzklebstoff sind dahingehend zu verstehen, dass sowohl der erste als auch der zweite Schmelzklebstoff wiederum aus mehreren, jeweils Polyester oder Polyamid basierten Schmelzklebstoffen gebildet sein können, insbesondere um eine Feineinstellung von Materialparametern und mechanischen Eigenschaften vornehmen zu können.

Erfindungsgemäß hat die Schmelzklebstoffmischung einen Anteil von mehr als 75 Gewichts-%, bevorzugt mehr als 85 Gewichts-%, besonders bevorzugt mehr als 95 Gewichts-%, insbesondere 100 Gewichts-% an dem Schmelzklebstoffsystem, wobei der Rest aus Füllstoffen wie Kreide und/oder Pigmenten wie Titandioxid als Weißpigment und/oder einem klebrig machenden Harz (aromatische, aliphatische oder cycloaliphatische Kohlenwasserstoff-Harze oder modifizierte oder hydrierte Versionen von diesen, beispielsweise Kolophonium(-ester) oder aliphatische oder alicyclische Petroleum-Kohlenwasserstoffharze oder deren hydrierte Derivate; wie beispielsweise aus WO 2007/057059 A1 bekannt) und/oder Paraffin und/oder einem weiteren Schmelzklebstoff auf Polykondensat-Basis gebildet ist, wobei die Bestandteile des Restes insbesondere jeweils zu einem Gewichtsanteil von maximale 0-5% enthalten sind.

In einer Ausführungsform enthält das Schmelzklebstoffsystem zwischen 0-25 Gewichts-% Additive oder Füllmittel, die aus den nachfolgend genannten Additiven und Füllmitteln der Basisschmelzklebstoffe, nämlich des ersten Polyester basierten Schmelzklebstoffes und des zweiten Polyamid basierten Schmelzklebstoffes gewählt sein können.

In einer Ausführungsform enthält der Polyester basierte Schmelzklebstoff als Additiv ein Carbodiimid, Calciumoxid oder ein Anhydrid, insbesondere zur Verbesserung der Hydrolysebeständigkeit und/oder der Klebeeigenschaften, insbesondere in einem Gewichtsanteil von 0-5%.

In einer Ausführungsform enthält der Polyester basierte Schmelzklebstoff als Additiv ein Wachs, insbesondere Paraffin und/oder ein Oxidwachs oder ein pulverförmiges Additiv, insbesondere pyrogene Kieselsäure, insbesondere zur Beschleunigung der Kristallisation, insbesondere in einem Gewichtsanteil von 0-5%.

In einer Ausführungsform weist der Polyester basierte Schmelzklebstoff eine Dichte zwischen 1,15 und 1,35 g/cm³, bevorzugt 1,2-1,3 g/cm³, besonders bevorzugt 1,23-1,27 g/cm³ auf.

In einer Ausführungsform weist der Polyamid basierte Schmelzklebstoff eine Dichte zwischen 0,95 und 1 g/cm³, bevorzugt 0,97-0,99 g/cm³ auf.

In einer Ausführungsform weist der Polyester basierte Schmelzklebstoff eine Reißdehnung von >50%, bevorzugt >75%, besonders bevorzugt >90% auf, insbesondere gemessen nach ISO 527.

In einer Ausführungsform weist der Polyester basierte Schmelzklebstoff eine Schmelztemperatur zwischen 150°C und 160°C auf.

In einer Ausführungsform weist der Polyamid basierte Schmelzklebstoff eine Erweichungstemperatur kleiner 188°C, bevorzugt kleiner 175°C, besonders bevorzugt kleiner 165°C auf.

In einer Ausführungsform weist der Polyamid basierte Schmelzklebstoff eine Verarbeitungstemperatur zwischen 180°C und 230°C auf.

In einer Ausführungsform ist der Polyester basierte Schmelzklebstoff aus einer Komposition von Grundstoffen, die Komposition umfassend
(1) mindestens eine Säure, insbesondere Phtalsäure oder Isophtalsäure oder Terephthalsäure oder Adipinsäure oder Butandisäure oder 6-Hydroxyhexansäure oder einer Mischung aus mindestens zwei dieser Säuren, insbesondere zur Reduzierung der Kristallinität,
(2) und mindestens ein Diol, insbesondere 1,2-Ethandiol oder 1,4-Butandiol oder Neopentylglycol oder 1,6-Hexandiol oder Cyclohexandimethanol oder Diethylenglykol oder einer Mischung mindestens zwei dieser Diole, insbesondere zur Reduzierung der Kristallinität,
insbesondere durch Polykondensation gebildet.

In einer Ausführungsform ist der Polyester basierte Schmelzklebstoff aus einer Komposition von Grundstoffen, die Komposition umfassend 30-50 Gewichts-%, bevorzugt 30-45 Gewichts-%, besonders bevorzugt 30-40 Gewichts-% Butandiol oder Ethandiol oder einer Mischung daraus gebildet.

In einer Ausführungsform ist der Polyester basierte Schmelzklebstoff aus einer Komposition von Grundstoffen, die Komposition umfassend >20 Gewichts-%, bevorzugt >30 Gewichts-% Terephthalsäure gebildet, insbesondere zur Reduzierung der Fadenzugneigung und/oder der Erhöhung des Schmelzpunktes.

In einer Ausführungsform ist der Polyester basierte Schmelzklebstoff aus einer Komposition von Grundstoffen, die Komposition umfassend <65 Gewichts-%, bevorzugt <45 Gewichts-%, besonders bevorzugt <35 Gewichts-% Terephthalsäure gebildet, insbesondere zur Reduzierung der Fadenzugneigung.

In einer Ausführungsform ist der Polyester basierte Schmelzklebstoff aus einer Komposition von Grundstoffen, die Komposition umfassend >10 Gewichts-%, bevorzugt >20 Gewichts-%, besonders bevorzugt >25 Gewichts-% Adipinsäure gebildet, insbesondere zur Reduzierung des Schmelzpunktes und/oder der Fadenzugneigung und/oder der Senkung der Viskosität und/oder der Steigerung der Verformbarkeit und/oder zur Erhöhung der Reißdehnung.

In einer Ausführungsform ist der Polyester basierte Schmelzklebstoff aus einer Komposition von Grundstoffen, die Komposition umfassend <40 Gewichts-%, bevorzugt <30 Gewichts-% Adipinsäure gebildet, insbesondere zur Reduzierung des Schmelzpunktes und/oder der Fadenzugneigung und/oder der Senkung der Viskosität und/oder der Steigerung der Verformbarkeit und/oder zur Erhöhung der Reißdehnung.

In einer Ausführungsform ist der Polyamid basierte Schmelzklebstoff aus einer Komposition von Grundstoffen, die Komposition umfassend
(1) mindestens eine Säure, insbesondere Adipinsäure oder Azelainsäure oder Sebazinsäure oder Dimerfettsäure oder eine Mischung aus mindestens zwei dieser Säuren,
(2) und mindestens ein Amin, insbesondere Ethylendiamin oder Hexamethylendiamin oder 2,2,4-Trimethylhexamethylendiamin oder ε-Caprolactam oder 1-Amino-3-aminomethyl-3,5,5-trimethylcyclohexan (Isophorondiamin) oder Piperazin oder eine Mischung aus mindestens zwei dieser Amine,
insbesondere durch Polykondensation gebildet.

In einer Ausführungsform ist der Polyamid basierte Schmelzklebstoff aus einer Komposition von Grundstoffen, die Komposition umfassend 50-90 Gewichts-%, bevorzugt 60-80 Gewichts-%, besonders bevorzugt 60-70 Gewichts-% ε-Caprolactam oder Hexamethylendiamin oder 2,2,4-Trimethylhexamethylendiamin oder einer Mischung aus mindestens zwei dieser Amine gebildet.

In einer Ausführungsform ist der Polyamid basierte Schmelzklebstoff aus einer Komposition von Grundstoffen, die Komposition umfassend >5 Gewichts-%, bevorzugt >10 Gewichts-%, besonders bevorzugt >15 Gewichts-% Adipinsäure gebildet, insbesondere zur Verbesserung der Wärmestandfestigkeit und/oder zur Reduzierung der Fadenzugneigung und/ oder zur Erhöhung der Reißdehnung.

In einer Ausführungsform ist der Polyamid basierte Schmelzklebstoff aus einer Komposition von Grundstoffen, die Komposition umfassend <30 Gewichts-%, bevorzugt <25 Gewichts-% Adipinsäure gebildet, insbesondere zur Verbesserung der Wärmestandfestigkeit und/oder zur Reduzierung der Fadenzugneigung.

In einer Ausführungsform ist der Polyamid basierte Schmelzklebstoff aus einer Komposition von Grundstoffen, die Komposition umfassend und <30 Gewichts-%, bevorzugt <25 Gewichts-% Sebazinsäure gebildet, insbesondere zur Verbesserung der Wärmestandfestigkeit und/oder zur Reduzierung der Fadenzugneigung.

In einer Ausführungsform beträgt der Gesamtanteil der Adipinsäure an den Grundstoffen des Polyamid basierten Schmelzklebstoffes und des Polyester basierten Schmelzklebstoffes >5 Gewichts-%, bevorzugt > 10 Gewichts-%, besonders bevorzugt >15 Gewichts-% und gleichzeitig <35 Gewichts-%, bevorzugt <30 Gewichts-% und besonders bevorzugt <25 Gewichts-%, insbesondere zur Verbesserung der Wärmestandfestigkeit und/oder zur Reduzierung der Fadenzugneigung.

In einer Ausführungsform umfasst das Schmelzklebstoffsystem eine Schmelzklebstoffmischung, die Mischung umfassend
(1) zwischen 30 und 70 Gewichts-%, bevorzugt 40-60 Gewichts-%, insbesondere 45-55 Gewichts-% eines ersten Polyester basierten Schmelzklebstoffes,
(2) zwischen 30 und 70 Gewichts-%, bevorzugt 40-60 Gewichts-%, insbesondere 45-55 Gewichts-% eines zweiten Polyamid basierten Schmelzklebstoffes,
wobei das Schmelzklebstoffsystem insbesondere vollständig aus der Schmelzklebstoffmischung gebildet ist und diese insbesondere vollständig aus dem ersten und dem zweiten Schmelzklebstoff gebildet ist.

In einer Ausführungsform ist das Schmelzklebstoffsystem mit einem Gas, insbesondere Stickstoff, Luft, CO₂ oder dergleichen aufgeschäumt.

Die mit dem aufgeschäumten Klebstoffsystem ausgebildeten Klebstoffspuren weisen vorzugsweise eine geschlossene Oberfläche auf.

Das Verfahren zur Herstellung des erfindungsgemäßen Schmelzklebstoffsystems umfasst die Schritte
(1) Aufschmelzen eines ersten Schmelzklebstoffes, der Polyester basiert ist, und eines zweiten Schmelzklebstoffes, der Polyamid basiert ist, insbesondere in erfindungsgemäßer Zusammensetzung und erfindungsgemäßem Mengenverhältnis,
(2) insbesondere dynamisches Mischen der beiden Schmelzklebstoffe, insbesondere unter Erzeugung von Scherkräften in der Schmelze zu einer Schmelzklebstoffmischung,
wobei insbesondere ein erfindungsgemäßer Schmelzklebstoff gebildet wird.

Dies hat den Vorteil, dass ein Schmelzklebstoff mit einer geringeren Fadenzugneigung gebildet werden kann.

In einer Ausführungsform beider Verfahren werden die Granulate der beiden Schmelzklebstoffe vor dem Erhitzen durchmengt und anschließend erhitzt und aufgeschmolzen.

In einer Ausführungsform beider Verfahren erfolgt das Mischen, Erhitzen und Aufschmelzen der Schmelzklebstoffe in einem Extruder.

Dies hat den Vorteil, dass nahe am Auftragsort eine sehr gute Durchmischung der Schmelzklebstoffe erreicht wird.

In einer Ausführungsform wird das aufgeschmolzene Schmelzklebstoffsystem mit einem Gas, insbesondere Stickstoff, Luft, CO₂ oder dergleichen aufgeschäumt.

In einer Ausführungsform des Verfahrens erfolgt abschließend, insbesondere ohne zwischenzeitliches Abkühlen ein spurförmiger, regelmäßig oder unregelmäßig unterbrochener Auftrag auf ein flaches, insbesondere faseriges Substrat.

Dabei ist vorteilhaft, dass der Auftrag nur wenige Minuten (insbesondere 0-5 Minuten) nach dem Mischen erfolgt, um die Entmischung der Komponenten möglichst geringzuhalten.

### Ausführungsform(en) der Erfindung

Die nachfolgenden Beispiele zeigen erfindungsgemäße oder qualitative zum Vergleich herangezogene Arbeitsweisen auf.

### Beispiel 1

Ein Polyester-Schmelzklebstoff (Sika SikaMelt 9120) mit einer Dichte von 1,25 g/cm³ und einer Reißdehnung von im Bereich von 75-115 % und ein Polyamid-Schmelzklebstoff (Henkel Marcomet 6208) mit einer Dichte von 0,98 g/cm³ werden jeweils separat unter Mischen auf Verarbeitungstemperatur (200°C) erwärmt. Die Fadenzugneigung wird qualitativ derart ermittelt, dass ein 1 mm dicker Metallrundstab in die Schmelze getaucht und ruckartig herausgezogen wird. Bei Beispiel 1 verbleibt bei beiden Schmelzklebstoffen ein Schmelzklebstofftropfen an dem Metallrundstab, an welchem sich direkt beim Herausziehen aus der Schmelze ein Schmelzklebstofffaden verbleibt, der auskühlt und aushärtet. Ein verbleibender, verfestigter Faden ist erkennbar. Die Fadenzugneigung wird deshalb als hoch beurteilt. Ferner wird das Granulat der beiden genannten Schmelzklebstoffe gemischt und das durchmischte Granulat in einem Extruder auf 200°C erhitzt und gemeinsam aufgeschmolzen und weiter durchmischt. Sofort danach erfolgt, um die Entmischung gering zu halten, ein Auftrag mittels einer direkt mit einer Zahnradpumpe gekoppelten Auftragsdüse auf ein flaches Medium. Dabei ist überraschend eine geringere Bildung von Fäden als bei der Verwendung der beiden Schmelzklebstoffe in separater Form festzustellen. Auch wird die Fadenzugneigung der Schmelzklebstoffmischung qualitativ beurteilt, derart, dass ein 1 mm dicker Metallrundstab in die vorher nochmals in einer auf Bearbeitungstemperatur erwärmten Porzellanschale dynamisch vermischte Schmelze getaucht und ruckartig herausgezogen wird. Es verbleibt ein Schmelzklebstofftropfen an dem Metallrundstab, in welchen sich der direkt nach dem Herausziehen des Metallrundstabes aus der Schmelze gebildete Faden zurückzieht. Ein verbleibender Faden ist nicht erkennbar. Die Fadenzugneigung wird deshalb als gering beurteilt.

### Beispiel 2

Es werden in gleichen Gewichtsanteilen ein Polyesterschmelzklebstoff mit einem Schmelzpunkt bei 150-160°C, im Wesentlichen gebildet aus 40 Gewichts-% Butandiol, 33 Gewichts-% Terephthalsäure, 27 Gewichts-% Adipinsäure und ein Polyamidschmelzklebstoff mit einem Schmelzpunkt bei 130°C, gebildet aus 67 Gewichts-% ε-Caprolactam, 5 Gewichts-% 2,2,4 Trimethylhexamethylendiamin, 12 Gewichts-% 1-Amino-3-aminomethyl-3,5,5-trimethylcyclohexan und 16 Gewichts-% Adipinsäure in Granulatform durchmischt und gemeinsam unter dynamischem Mischen aufgeschmolzen. Die Fadenzugneigung wird qualitativ derart ermittelt, dass ein 1 mm dicker Metallrundstab in die Schmelze getaucht und ruckartig herausgezogen wird. Bei Beispiel 2 verbleibt ein Schmelzklebstofftropfen an dem Metallrundstab, in welchen sich der direkt nach dem Herausziehen des Metallrundstabes aus der Schmelze gebildete Faden zurückzieht. Ein verbleibender Faden ist nicht erkennbar. Die Fadenzugneigung wird deshalb als gering beurteilt.

### Beispiel 3

Der Polyesterschmelzklebstoff (Sika Sikamelt 9420) mit einer Reißdehnung von ca. 50-60% und einem Adipinsäuregehalt von ca. 9 Gewichtsanteilen wird in Gewichtsanteilen 60:40, 65:35, 70:30 (der Polyesterschmelzklebstoff jeweils erstgenannt) mit einem Polyamidschmelzklebstoff (Henkel Macromet 6208) mit einer Schmelztemperatur zwischen 188 und 195°C und einer Dichte von 1,02 g/cm³ wie in Beispiel 1 vermischt und auf Fadenzugneigung überprüft.

Bei Beispiel 3 verbleibt ein Schmelzklebstofftropfen an dem Metallrundstab, in welchen sich der direkt nach dem Herausziehen des Metallrundstabes aus der Schmelze gebildete Faden je nach Mischungsverhältnis vollständig oder teilweise zurückzieht. Der Effekt ist dabei deutlich geringer ausgeprägt als bei der Applikation der beiden Schmelzklebstoffe in separater Verwendung.

### Beispiel 4

Der Polyesterschmelzklebstoff aus Beispiel 2 und ein Polyamidschmelzklebstoff mit einer Dichte von 0,97 g/cm³, einem Erweichungspunkt von 190-205 °C (Henkel Macromet 2035) werden zu Gewichtsanteilen 30:70, 50:50 und 70:30 analog Beispiel 1 gemischt und geprüft. Bei Beispiel 4 verbleibt ein Schmelzklebstofftropfen an dem Metallrundstab, in welchen sich der direkt nach dem Herausziehen des Metallrundstabes aus der Schmelze gebildete Faden zurückzieht. Ein verbleibender Faden ist nicht erkennbar oder deutlich kleiner ausgeprägt als bei der Applikation der beiden Schmelzklebstoffe in separater Verwendung, wobei ab einem Gewichtsanteil von 70% des genannten Polyesterklebstoffes die Fadenzugneigung wieder zunimmt. Die Fadenzugneigung wird deshalb als gering beurteilt.

### Kurze Beschreibung der Zeichnung(en)

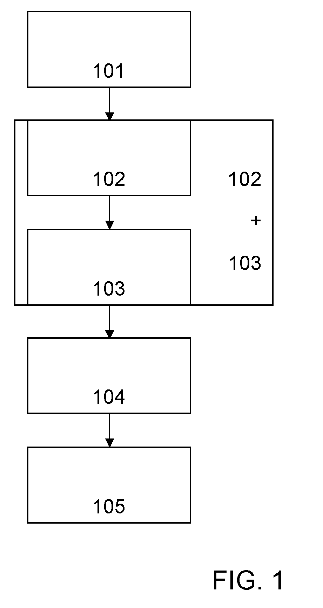

In Figur 1 ist ein Ausführungsbeispiel des Ablaufs eines erfindungsgemäßen Verfahrens zur Herstellung eines Schmelzklebstoffsystems gezeigt.

Das Verfahren zur Herstellung des erfindungsgemäßen Schmelzklebstoffsystems umfasst in einer Ausführungsform die Schritte:
(101) Durchmengen der Granulate der beiden Schmelzklebstoffe vor dem Erhitzen,
(102) Aufschmelzen des ersten Schmelzklebstoffes, der Polyester basiert ist, und des zweiten Schmelzklebstoffes, der Polyamid basiert ist, insbesondere in erfindungsgemäßer Zusammensetzung und erfindungsgemäßem Mengenverhältnis, beispielsweise in einem Tankschmelzgerät,
(103) insbesondere dynamisches Mischen der beiden Schmelzklebstoffe, insbesondere unter Erzeugung von Scherkräften in der Schmelze zu einer Schmelzklebstoffmischung, beispielsweise mit einem Rührwerk oder einem Förderwerk mit Förderschnecken oder Zahnrädern,
   wobei die Schritte 102 und 103 jedoch vorzugsweise gleichzeitig als Schritt (102+103) in einem Extruder durchgeführt werden,
(104) fakultatives Aufschäumen des aufgeschmolzenen Schmelzklebstoffsystems mit einem Gas, insbesondere Stickstoff, Luft, CO₂ oder dergleichen,
(105) fakultativ abschließender, spurförmiger, regelmäßig oder unregelmäßig unterbrochener Auftrag auf ein flaches, insbesondere faseriges Substrat, insbesondere ohne zwischenzeitliches Abkühlen, insbesondere nur 0-5 Minuten nach dem Mischen, wodurch ein erweitertes Verfahren zur Herstellung und zum Auftrag eines Schmelzklebstoffsystems entsteht.

## Patentansprüche

1. Schmelzklebstoffsystem, umfassend mindestens eine Schmelzklebstoffmischung, die Schmelzklebstoffmischung umfassend
a. 15-85 Gewichts-% eines ersten Schmelzklebstoffes, der Polyester basiert ist,
b. 15-85 Gewichts-% eines zweiten Schmelzklebstoffes, der Polyamid basiert ist,
wobei die Gewichtsanteile des ersten und des zweiten Schmelzklebstoffes zusammen 100 Gewichts-% der Schmelzklebstoffmischung ergeben,
wobei die Schmelzklebstoffmischung einen Anteil von mehr als 75 Gewichts-% an dem Schmelzklebstoffsystem hat, wobei der Rest aus Füllstoffen wie Kreide und/oder Pigmenten wie Titandioxid als Weißpigment und/oder einem klebrig machenden Harz und/oder mindestens einem weiteren Schmelzklebstoff auf Polykondensat-Basis gebildet ist, **dadurch gekennzeichnet, dass** der Polyester basierte Schmelzklebstoff einen Schmelzpunkt zwischen 150°C und 170°C und der Polyamid basierte Schmelzklebstoff einen Schmelzpunkt zwischen 180°C und 210°C aufweist.

2. Schmelzklebstoffsystem nach Anspruch 1, **dadurch gekennzeichnet, dass** der Polyester basierte Schmelzklebstoff eine Dichte zwischen 1,15 und 1,35 g/cm³, bevorzugt 1,2-1,3 g/cm³, besonders bevorzugt 1,23-1,27 g/cm³ und der Polyamid basierte Schmelzklebstoff eine Dichte zwischen 0,95 und 1 g/cm³, bevorzugt 0,97-0,98 g/cm³ aufweist.

3. Schmelzklebstoffsystem nach einem der vorhergehenden Ansprüche, **dadurch gekennzeichnet, dass** der Polyester basierte Schmelzklebstoff eine Reißdehnung >50%, bevorzugt >70%, besonders bevorzugt >90% gemessen nach ISO 527 aufweist.

4. Schmelzklebstoffsystem nach einem der vorhergehenden Ansprüche, **dadurch gekennzeichnet, dass** der Polyester basierte Schmelzklebstoff aus einer Komposition von Grundstoffen, die Komposition umfassend
a. mindestens eine Säure, insbesondere Phtalsäure oder Isophtalsäure oder Terephthalsäure oder Adipinsäure oder Butandisäure oder 6-Hydroxyhexansäure oder einer Mischung aus mindestens 2 dieser Säuren
b. und mindestens ein Diol, insbesondere 1,2-Ethandiol oder 1,4-Butandiol oder Neopentylglycol oder 1,6-Hexandiol oder Cyclohexandimethanol oder Diethylenglykol oder einer Mischung mindestens zwei dieser Diole, gebildet ist.

5. Schmelzklebstoffsystem nach einem der vorhergehenden Ansprüche, **dadurch gekennzeichnet, dass** der Polyester basierte Schmelzklebstoff aus einer Komposition von Grundstoffen, die Komposition umfassend 30-50 Gewichts-%, bevorzugt 30-45 Gewichts-%, besonders bevorzugt 30-40 Gewichts-% Butandiol oder Ethandiol oder eine Mischung daraus gebildet ist.

6. Schmelzklebstoffsystem nach einem der vorhergehenden Ansprüche, **dadurch gekennzeichnet, dass** der Polyester basierte Schmelzklebstoff aus einer Komposition von Grundstoffen, die Komposition umfassend >20 Gewichts-%, bevorzugt >30 Gewichts-% Terephthalsäure gebildet ist.

7. Schmelzklebstoffsystem nach einem der vorhergehenden Ansprüche, **dadurch gekennzeichnet, dass** der Polyester basierte Schmelzklebstoff aus einer Komposition von Grundstoffen, die Komposition umfassend <65 Gewichts-%, bevorzugt <45 Gewichts-%, besonders bevorzugt <35 Gewichts-% Terephthalsäure gebildet ist.

8. Schmelzklebstoffsystem nach einem der vorhergehenden Ansprüche, **dadurch gekennzeichnet, dass** der Polyester basierte Schmelzklebstoff aus einer Komposition von Grundstoffen, die Komposition umfassend einen Gewichtsanteil Adipinsäure, der Gewichtsanteil betragend >5 Gewichts-%, bevorzugt >=9 Gewichts-%, weiter bevorzugt >20 Gewichts-%, besonders bevorzugt >25 Gewichts-% und <40 Gewichts-%, bevorzugt <30 Gewichts-%, gebildet ist.

9. Schmelzklebstoffsystem nach einem der vorhergehenden Ansprüche, **dadurch gekennzeichnet, dass** der Polyamid basierte Schmelzklebstoff aus einer Komposition von Grundstoffen, die Komposition umfassend
a. mindestens eine Säure, insbesondere Adipinsäure oder Azelainsäure oder Sebazinsäure oder Dimerfettsäure oder eine Mischung aus mindestens zwei dieser Säuren
b. und mindestens ein Amin, insbesondere Ethylendiamin oder Hexamethylendiamin oder 2,2,4-Trimethylhexamethylendiamin oder ε-Caprolactam oder 1-Amino-3-aminomethyl-3,5,5-trimethylcyclohexan oder Isophorendiamin oder Piperazin oder eine Mischung aus mindestens zwei dieser Amine, gebildet ist.

10. Schmelzklebstoffsystem nach einem der vorhergehenden Ansprüche, **dadurch gekennzeichnet, dass** der Polyamid basierte Schmelzklebstoff aus einer Komposition von Grundstoffen, die Komposition umfassend 50-90 Gewichts-%, bevorzugt 60-80 Gewichts-%, besonders bevorzugt 60-70 Gewichts-% ε-Caprolactam oder Hexamethylendiamin oder 2,2,4-Trimethylhexamethylendiamin oder einer Mischung aus mindestens zwei dieser Amine gebildet ist.

11. Schmelzklebstoffsystem nach einem der vorhergehenden Ansprüche, **dadurch gekennzeichnet, dass** der Polyamid basierte Schmelzklebstoff aus einer Komposition von Grundstoffen, die Komposition umfassend einen Anteil Adipinsäure, der Anteil betragend >5 Gewichts-%, bevorzugt >10 Gewichts-%, besonders bevorzugt >15 Gewichts-% und <30 Gewichts-%, bevorzugt <25 Gewichts-%, gebildet ist.

12. Schmelzklebstoffsystem nach einem der vorhergehenden Ansprüche, **dadurch gekennzeichnet, dass** der Gesamtanteil der Adipinsäure an den Grundstoffen des Polyamid basierten Schmelzklebstoffes und des ersten Polyester basierten Schmelzklebstoffes >5 Gewichts-%, bevorzugt >10 Gewichts-%, besonders bevorzugt >15 Gewichts-% und gleichzeitig <35 Gewichts-%, bevorzugt <30 Gewichts-% und besonders bevorzugt <25 Gewichts-% beträgt.

13. Verwendung eines Schmelzklebstoffsystems nach einem der vorhergehenden Ansprüche zum fadenzugfreien Verkleben von flachen Substraten, insbesondere faltbaren Zellulosesubstraten wie Papier oder schmelzgeblasenen Substraten oder Kombinationen davon, insbesondere mittels in Form von länglichen, regelmäßig unterbrochenen Schmelzklebstoffspuren.

## Claims

1. Hot-melt adhesive system, comprising at least one hot-melt adhesive mixture, the hot-melt adhesive mixture comprising
a. 15-85 % by weight of a first hot-melt adhesive which is polyester-based,
b. 15-85 % by weight of a second hot-melt adhesive which is polyamide-based,
wherein the parts by weight of the first and the second hot-melt adhesive in combination result in 100 % by weight of the hot-melt adhesive mixture, wherein the hot-melt adhesive mixture has a proportion of more than 75 % by weight of the hot-melt adhesive system, wherein the rest is made of filling material such as chalk and/or pigments such as titanium dioxide as white pigment and/or a tackifying resin and/or at least one further hot-melt adhesive on polycondensate base, **characterized in that** the polyester-based hot-melt adhesive features a melting point between 150 °C and 170 °C and the polyamide-based hot-melt adhesive a melting point between 180 °C and 210 °C.

2. Hot-melt adhesive system according to claim 1, **characterized in that** the polyester-based hot-melt adhesive features a density between 1.15 and 1.35 g/cm³, preferably 1.2-1.3 g/cm³, particularly preferred 1.23-1.27 g/cm³ and the polyamide-based hot-melt adhesive a density between 0.95 and 1 g/cm³, preferably 0.97-0.98 g/cm³.

3. Hot-melt adhesive system according to one of the above claims, **characterized in that** the polyester-based hot-melt adhesive has an elongation at break >50 %, preferably >70 %, particularly preferred >90 % measured according to ISO 527.

4. Hot-melt adhesive system according to one of the above claims, **characterized in that** the polyester-based hot-melt adhesive is made of a composition of basic materials, the composition comprising
a. at least one acid, in particular phthalic acid or isophthalic acid or terephthalic acid or adipic acid or succinic acid or 6-hydroxyhexanoic acid or a mixture of at least two of these acids
b. and at least one diol, in particular 1,2-ethanediol or 1,4-butanediol or neopentyl glycol or 1,6-hexanediol or cyclohexane dimethanol or diethylene glycol or a mixture of at least two of these diols.

5. Hot-melt adhesive system according to one of the above claims, **characterized in that** the polyester-based hot-melt adhesive is made of a composition of basic materials, the composition comprising 30-45 % by weight, preferably 30-45 % by weight, particularly preferred 30-40 % by weight of butanediol or ethanediol or a mixture thereof.

6. Hot-melt adhesive system according to one of the above claims, **characterized in that** the polyester-based hot-melt adhesive is made of a composition of basic materials, the composition comprising >20 % by weight, preferably >30 % by weight of terephthalic acid.

7. Hot-melt adhesive system according to one of the above claims, **characterized in that** the polyester-based hot-melt adhesive is made of a composition of basic materials, the composition comprising <65 % by weight, preferably <45 % by weight, particularly preferred <35 % by weight of terephthalic acid.

8. Hot-melt adhesive system according to one of the above claims, **characterized in that** the polyester-based hot-melt adhesive is made of a composition of basic materials, the composition comprising a weight proportion of adipic acid, the weight proportion amounting to >5 % by weight, preferably >=9 % by weight, further preferred >20 % by weight, particularly preferred >25 % by weight and <40 % by weight, preferably <30 % by weight.

9. Hot-melt adhesive system according to one of the above claims, **characterized in that** the polyamide-based hot-melt adhesive is made of a composition of basic materials, the composition comprising
a. at least one acid, in particular adipic acid or azelaic acid or sebacic acid or dimer fatty acid or a mixture of at least two of these acids
b. and at least one amine, in particular ethylenediamine or hexamethylenediamine or 2,2,4-trimethylhexamethylenediamine or ε-caprolactam or 1-amino-3-aminomethyl-3,5,5-trimethylcyclohexane or isophorendiamine or piperazine or a mixture of at least two of these amines.

10. Hot-melt adhesive system according to one of the above claims, **characterized in that** the polyamide-based hot-melt adhesive is made of a composition of basic materials, the composition comprising 50-90 % by weight, preferably 60-80 % by weight, particularly preferred 60-70 % by weight of ε-caprolactam or hexamethylenediamine or 2,2,4-trimethylhexamethylenediamine or a mixture of at least two of these amines.

11. Hot-melt adhesive system according to one of the above claims, **characterized in that** the polyamide-based hot-melt adhesive is made of a composition of basic materials, the composition comprising a proportion of adipic acid, the proportion amounting to >5 % by weight, preferably >10 % by weight, particularly preferred >15 % by weight and <30 % by weight, preferably <25 % by weight.

12. Hot-melt adhesive system according to one of the above claims, **characterized in that** the total percentage of the adipic acid on the basic materials of the polyamide-based hot-melt adhesive and the first polyester-based hot-melt adhesive amounts to >5 % by weight, preferably >10 % by weight, particularly preferred >15 % by weight and at the same time <35 % by weight, preferably <30 % by weight and particularly preferred <25 % by weight.

13. Utilization of a hot-melt adhesive system according to one of the above claims for string-free bonding of flat substrates, in particular foldable cellulosic substrates such as paper or meltblown substrates or combinations thereof, in particular by means of elongated, regularly interrupted hot-melt traces.

## Revendications

1. Système de colles thermofusibles, comprenant au moins un mélange de colles thermofusibles, le mélange de colles thermofusibles comprenant
a. 15 à 85 % en poids d'une première colle thermofusible à base de polyester,
b. 15 à 85 % en poids d'une deuxième colle thermofusible à base de polyamide,
les pourcentages en poids de la première et de la deuxième colles thermofusibles représentant ensemble 100 % en poids du mélange de colles thermofusibles,
le mélange de colles thermofusibles représentant une part de plus de 75 % en poids du système de colles thermofusibles, le reste étant constitué de charges telles que de la craie et/ou des pigments comme du dioxyde de titane comme pigment blanc et/ou d'une résine ayant un effet collant et/ou d'au moins une autre colle thermofusible à base de polycondensat, **caractérisé en ce que** la colle thermofusible à base de polyester a un point de fusion situé entre 150 °C et 170 °C et que la colle thermofusibl e à base de polyamide a un point de fusion situé entre 180 °C et 210 °C.

2. Système de colles thermofusibles selon la revendication 1, **caractérisé en ce que** la colle thermofusible à base de polyester a une densité comprise entre 1,15 et 1,35 g/cm³, de préférence de 1,2 à 1,3 g/cm³, de façon particulièrement préférée 1,23 à 1,27 g/cm³ et que la colle thermofusible à base de polyamide a une densité comprise entre 0,95 et 1 g/cm³, de préférence de 0,97 à 0,98 g/cm³.

3. Système de colles thermofusibles selon l'une des revendications précédentes, **caractérisé en ce que** la colle thermofusible à base de polyester présente une élongation à la rupture >50 %, de préférence de >70 %, de façon particulièrement préférée >90 %, mesurée selon la norme ISO 527.

4. Système de colles thermofusibles selon l'une des revendications précédentes, **caractérisé en ce que** la colle thermofusible à base de polyester est constituée d'une composition de matériaux de base, cette composition comprenant
a. au moins un acide, en particulier de l'acide phtalique ou de l'acide isophtalique ou de l'acide téréphtalique ou un acide adipique ou de l'acide butane dioïque ou de l'acide 6-hydroxyhexanoïque ou un mélange d'au moins deux de ces acides
b. et au moins un diol, en particulier du 1,2-étanediol ou du 1,4-butanediol ou du néopentylglycol ou du 1,6-hexanediol ou du cyclohexanediméthanol ou du diéthylèneglycol ou un mélange d'au moins deux de ces diols.

5. Système de colles thermofusibles selon l'une des revendications précédentes, **caractérisé en ce que** la colle thermofusible à base de polyester est constituée d'une composition de matériaux de base, cette composition comprenant 30 à 50 % en poids, de préférence 30 à 45 % en poids, de façon particulièrement préférée 30 à 40 % en poids de butanediol ou d'étanediol ou d'un mélange de ces deux diols.

6. Système de colles thermofusibles selon l'une des revendications précédentes, **caractérisé en ce que** la colle thermofusible à base de polyester est constituée d'une composition de matériaux de base, cette composition comprenant >20 % en poids, de préférence >30 % en poids d'acide téréphtalique.

7. Système de colles thermofusibles selon l'une des revendications précédentes, **caractérisé en ce que** la colle thermofusible à base de polyester est constituée d'une composition de matériaux de base, cette composition comprenant <65 % en poids, de préférence <45 % en poids, de façon particulièrement préférée <35 % en poids d'acide téréphtalique.

8. Système de colles thermofusibles selon l'une des revendications précédentes, **caractérisé en ce que** la colle thermofusible à base de polyester est constituée d'une composition de matériaux de base, cette composition comprenant un pourcentage en poids d'acide adipique, le pourcentage en poids étant >5 % en poids, de préférence >=9 % en poids, et de préférence aussi >20 % en poids, de façon particulièrement préférée >25 % en poids et <40 % en poids, de préférence <30 % en poids.

9. Système de colles thermofusibles selon l'une des revendications précédentes, **caractérisé en ce que** la colle thermofusible à base de polyamide est constituée d'une composition de matériaux de base, cette composition comprenant
a. au moins un acide, en particulier de l'acide adipique ou de l'acide azélaïque ou de l'acide sébacique ou de l'acide gras dimère ou un mélange d'au moins deux de ces acides
b. et au moins une amine, en particulier de l'éthylènediamine ou de l'hexaméthylènediamine ou de la 2,2,4-triméthylhexaméthylènediamine ou du ε-caprolactame ou de l'1-amino-3-aminométhyl-3,5,5-triméthylcyclohexane ou de l'isophoronédiamine ou de la pipérazine ou un mélange d'au moins deux de ces amines.

10. Système de colles thermofusibles selon l'une des revendications précédentes, **caractérisé en ce que** la colle thermofusible à base de polyamide est constituée d'une composition de matériaux de base, cette composition comprenant 50 à 90 % en poids, de préférence 60 à 80 % en poids, de façon particulièrement préférée 60 à 70 % en poids de ε-caprolactame ou d'hexaméthylènediamine ou de 2,2,4-triméthylhexaméthylènediamine ou d'un mélange d'au moins deux de ces amines.

11. Système de colles thermofusibles selon l'une des revendications précédentes, **caractérisé en ce que** la colle thermofusible à base de polyamide est constituée d'une composition de matériaux de base, cette composition comprenant un pourcentage en poids d'acide adipique, le pourcentage en poids étant >5 % en poids, de préférence >10 % en poids, de façon particulièrement préférée >15 % en poids et <30 % en poids, de préférence <25 % en poids.

12. Système de colles thermofusibles selon l'une des revendications précédentes, **caractérisé en ce que** la part totale d'acide adipique dans les matériaux de base de la colle thermofusible à base de polyamide et de la première colle thermofusible à base de polyester est >5 % en poids, de préférence >10 % en poids, de façon particulièrement préférée >15 % en poids et, dans le même temps, <35 % en poids, de préférence <30 % en poids, de façon particulièrement préférée <25 % en poids.

13. Utilisation d'un système de colles thermofusibles selon l'une des revendications précédentes pour le collage sans fils de substrats plats, en particulier de substrats cellulosiques pliables tels que le papier ou de substrats soufflés à l'état fondu ou de combinaisons de tels substrats, en particulier au moyen de cordons de colles thermofusibles longitudinaux et pourvus d'interruptions régulières.
